# EUROPEAN PATENT APPLICATION

(11) **EP 4 625 629 A1**
(43) Date of publication of application: **01.10.2025**
(21) Application number: 25167278.8
(22) Date of filing: 31.03.2025
(51) Int. Cl.: H01M 50/126

(54) **SECONDARY BATTERY PACKAGING FILM, SECONDARY BATTERY, AND ELECTRIC APPARATUS**

(30) Priority: 30.03.2024 CN 202410383360
(71) Applicant: Ningde Amperex Technology Ltd., Ningde City, Fujian Province 352100 (CN)
(72) Inventor: XU, Wenjie, Ningde City, Fujian Province 352100 (CN)
(74) Representative: Icosa

(57) **Abstract**

A secondary battery packaging film (10) includes a composite layer (11), a metal layer (14), and a protective layer (15). The metal layer (14) is disposed on a surface of the composite layer (11), and the protective layer (15) is disposed on a side of the metal layer (14) facing away from the composite layer (11). The composite layer (11) includes a first insulation layer (12) and a second insulation layer (13), along a thickness direction of the composite layer (11), the second insulation layer (13) is located between the metal layer (14) and the first insulation layer (12). A melting point of the second insulation layer (13) is greater than or equal to 250°C, and a thickness of the second insulation layer (13) is greater than or equal to 2 µm. A melting point of the first insulation layer (12) is less than or equal to 200°C.

## Description

### TECHNICAL FIELD

Some embodiments of this application relate to the field of battery technologies, and in particular, to a secondary battery packaging film, a secondary battery, and an electric apparatus.

### BACKGROUND

In recent years, with the development of consumer electronics, energy storage, and the new energy vehicle industry, demands for secondary batteries have become more intense, and increasingly high requirements for product performance are imposed. In current consumer lithium-ion battery systems, high capacity and high energy density have become rigid demands in the market.

### SUMMARY

The inventor has found that capacities and energy density of secondary batteries increase, leading to a rise in safety risks. For example, when an external short circuit occurs in a secondary battery, a temperature near a tab rises quickly and becomes high, causing fusion of an inner heat sealing layer of a packaging aluminum plastic film near the tab. As a result, an aluminum layer in the aluminum plastic film is exposed, and then the exposed aluminum layer and the tab form a short circuit, leading to thermal runaway of the secondary battery.

Based on this, some embodiments of this application provide a secondary battery packaging film, a secondary battery, and an electric apparatus. This effectively alleviates an issue of thermal runaway that occurs in the battery during an external short circuit.

The following technical solutions are adopted for these embodiments of this application to resolve the technical issue.

According to a first aspect, some embodiments of this application provide a secondary battery packaging film including a composite layer, a metal layer, and a protective layer. The metal layer is disposed on a surface of the composite layer, and the protective layer is disposed on a side of the metal layer facing away from the composite layer. The composite layer includes a first insulation layer farther away from the metal layer and a second insulation layer closer to the metal layer. A melting point of the second insulation layer is greater than or equal to 250°C, and a thickness of the second insulation layer is greater than or equal to 2 µm. A melting point of the first insulation layer is less than or equal to 200°C.

In the foregoing technical solutions, when the secondary battery packaging film is applied to the secondary battery pouch, at a top sealing portion of the pouch, the first insulation layer in the composite layer fuses with a sealing adhesive on a tab assembly and is sealed through hot pressing, and the second insulation layer in the composite layer insulates and protects the metal layer. Because the melting point of the second insulation layer is greater than or equal to 250°C, that is, greater than a maximum temperature (230°C) in the external short circuit test of the secondary battery, and the thickness of the second insulation layer is greater than or equal to 2 µm, the second insulation layer with this thickness has specific melting point stability and can effectively insulate and protect the metal layer. When an external short circuit occurs in the secondary battery, high temperature resistance of the second insulation layer reduces a risk of fusion, thereby reducing a risk of exposing the metal layer. In other words, the second insulation layer can effectively insulate the metal layer from a tab, reducing the risk of thermal runaway of the battery caused by a short circuit between the tab and the metal layer. In addition, the melting point of the first insulation layer is less than or equal to 200°C, facilitating the fusion and sealing. On one hand, this allows the secondary battery packaging film to be applicable to common heat sealing processes (healing processes typically include: a sealing-head temperature of approximately 180°C to 200°C, a hot pressing time of 3s, and a pressure of 0.1 MPa to 0.5 MPa). On the other hand, since the melting point of the first insulation layer is lower than the maximum temperature (230°C) in the external short circuit test of the secondary battery, under a condition of heat accumulation inside the secondary battery, the first insulation layer may fuse to open the top sealing portion, so that the heat inside the secondary battery can be expelled with high-temperature gas through the opened top sealing portion, thereby effectively reducing the risk of thermal runaway of the secondary battery.

In some embodiments, the melting point of the first insulation layer is greater than or equal to 120°C, and less than or equal to 160°C. In this way, this melting-point range of the first insulation layer is applicable to current common packaging processes, allowing the packaging film to be applicable to current common packaging machines, thus ensuring versatility. On the other hand, when heat accumulates inside the secondary battery, a lower melting point of the first insulation layer can facilitate opening of the top sealing portion, so that the heat inside the secondary battery can be expelled with high-temperature gas through the opened top sealing portion, thereby effectively reducing the risk of thermal runaway of the secondary battery.

In some embodiments, a material of the second insulation layer comprises one or more selected from the group consisting of polyimide, polysilazane and borosilicone rubber. Melting points of these materials can reach 300°C or higher, and these materials have good insulation. Therefore, these materials can protect the metal layer when the external short circuit occurs in the secondary battery, reducing a risk of short circuit caused by contact between the exposed metal layer and the tab, thereby reducing the risk of thermal runaway of the secondary battery caused by the short circuit between the tab and the metal layer.

In some embodiments, the thickness range of the second insulation layer is 2 µm to 15 µm, and a preferred range is 8 µm to 12 µm. Without wishing to be bound by any theory or explanation, the inventor has fortuitously found that within this thickness range, the second insulation layer has a stable melting point and exhibits good mechanical properties, allowing the second insulation layer to effectively insulate and protect the metal layer. In addition, within this thickness range, the second insulation layer has high heat transfer efficiency, facilitating rapid transfer of heat from a sealing head to the first insulation layer during the packaging, so that the first insulation layer fuses with the sealing adhesive on the tab assembly for sealing.

In some embodiments, a total thickness range of the composite layer is 30 µm to 40 µm. The total thickness of the composite layer is approximately similar to or same as a thickness of a heat sealing layer (a polypropylene layer) in a current packaging aluminum plastic film, so that this packaging film is applicable to the current common packaging equipment and packaging processes, ensuring wide application. In addition, the total thickness range of the composite layer is 30 µm to 40 µm, the thickness range of the second insulation layer is 2 µm to 15 µm, and the thickness range of the first insulation layer is 15 µm to 38 µm. Therefore, the first insulation layer can meet a requirement for fusion and edge sealing, and is applicable to current common packaging processes (including a pressure, a time, and the like). In other words, the packaging film with the structure described above has good versatility.

In some embodiments, a thermal conductivity of the second insulation layer is greater than or equal to 0.1 W/m·K. Preferably, a thermal conductivity of the second insulation layer is greater than or equal to 0.2 W/m·K. A thermal conductivity is positively correlated with a heat transfer capability. Based on this, the thermal conductivity is greater than or equal to 0.1 W/m·K, and preferably, greater than or equal to 0.2 W/m·K, so that the second insulation layer has a strong heat transfer capability. Thus, during the packaging, heat can be rapidly transferred from the sealing head to the first insulation layer through the protective layer, the metal layer, and the second insulation layer, so that the first insulation layer can fuse under heat to complete the packaging.

In some embodiments, a material of the first insulation layer comprises one or more of polypropylene and polyethylene, the metal layer includes an aluminum layer, and the protective layer includes a nylon layer.

According to a second aspect, some embodiments of this application provide a secondary battery including a tab assembly, a cell body, and a pouch configured to accommodate the cell body. The pouch includes a pouch body and a top sealing portion connected to the pouch body. One end of the tab assembly is electrically connected to the cell body, and another end of the tab assembly penetrates the pouch body and the top sealing portion and then extends beyond the pouch. The pouch includes the secondary battery packaging film according to any one of these embodiments of the first aspect.

According to a third aspect, some embodiments of this application provide a secondary battery including a tab assembly, a cell body, and a pouch configured to accommodate the cell body. The pouch includes a pouch body and a top sealing portion connected to the pouch body. One end of the tab assembly is electrically connected to the cell body, and another end of the tab assembly penetrates the pouch body and the top sealing portion and then extends beyond the pouch. The top sealing portion includes the secondary battery packaging film according to any one of these embodiments of the first aspect.

According to a fourth aspect, some embodiments of this application provide an electric apparatus including the secondary battery according to the second aspect or the third aspect.

The foregoing descriptions are merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

One or more embodiments are used as examples for description by using figures in corresponding accompanying drawings. These example descriptions impose no limitation on these embodiments. Elements with a same reference sign in the accompanying drawings represent similar elements. Unless otherwise stated, the figures in the accompanying drawings impose no limitation on a scale.
FIG. 1 is a schematic structural diagram of layers in a secondary battery packaging film according to some embodiments of this application;
FIG. 2(a) is a schematic diagram of a packaging aluminum plastic film before packaging in the prior art;
FIG. 2(b) is a schematic diagram of a packaging process of a packaging aluminum plastic film in the prior art;
FIG. 2(c) is a schematic diagram of a packaging aluminum plastic film after packaging in the prior art;
FIG. 2(d) is a schematic diagram of a top sealing portion before packaging in the prior art;
FIG. 2(e) is a schematic diagram of application of a packaging aluminum plastic film to a secondary battery in the prior art;
FIG. 2(f) is a top view of a top sealing portion of a secondary battery in the prior art;
FIG. 3 is a schematic diagram of assembly of a secondary battery according to some embodiments of this application; and
FIG. 4 is a schematic structural diagram of a structure of a secondary battery according to some embodiments of this application.

### DETAILED DESCRIPTION

In the following descriptions, a secondary battery packaging film, a secondary battery, and an electric apparatus of this application are described in detail with appropriate reference to the accompanying drawings. However, there may be cases in which unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for persons skilled in the art to fully understand this application and are not intended to limit the subject described in the claims.

Unless otherwise stated, all embodiments and optional embodiments of this application can be combined with each other to form new technical solutions.

Unless otherwise stated, all the technical features and optional technical features of this application can be combined with each other to form new technical solutions.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise stated, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

In the field of secondary battery packaging technologies, widely used packaging aluminum plastic films include a heat sealing layer, an aluminum layer, and a protective layer. The aluminum layer provides certain strength to a battery, protecting the battery from damage caused by external forces and preventing moisture ingress. In addition, to protect the aluminum layer from scratches and implement continuous operation without damaging appearance during processing, the protective layer is placed outside the aluminum layer. The heat sealing layer fuses with a sealing adhesive in a tab assembly under combined influence of a specific temperature, pressure, and time during the packaging. In this way, the packaging of the battery is completed. In addition, the heat sealing layer can prevent direct contact between the aluminum layer and an electrolyte.

A current heat sealing layer is mainly made of a polypropylene (PP for short) polymer material, which melts at a specific temperature and is adhesive. This material fuses and bonds with the sealing adhesive (usually made of a polypropylene or polyethylene material) in the tab assembly at a high temperature. In this way, the packaging is completed. In an external short circuit test of the battery, a temperature of the tab assembly can rise to 230°C. However, a PP layer, whose melting point usually only reaches around 160°C, is prone to fusion when an external short circuit occurs in the battery, causing exposure of the aluminum layer. The exposed aluminum layer and a tab then form a short circuit, leading to thermal runaway of the secondary battery. In other words, there is a risk of failure during the external short circuit test.

Based on this, some embodiments of this application provide a secondary battery packaging film, a secondary battery, and an electric apparatus. Such secondary battery packaging film can effectively alleviate the issue of thermal runaway when an external short circuit occurs in the battery.

### Secondary battery packaging film

A first aspect of this application provides a secondary battery packaging film, including a composite layer, a metal layer, and a protective layer. The metal layer is disposed on a surface of the composite layer, and the protective layer is disposed on a side of the metal layer facing away from the composite layer. The composite layer includes a first insulation layer farther away from the metal layer and a second insulation layer closer to the metal layer. A melting point of the second insulation layer is greater than or equal to 250°C, and a thickness of the second insulation layer is greater than or equal to 2 µm. A melting point of the first insulation layer is less than or equal to 200°C.

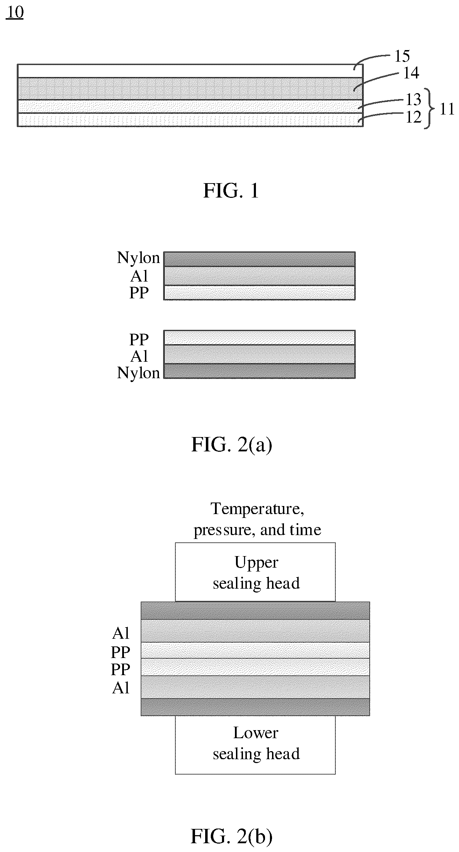

FIG. 1 is a schematic cross-sectional view of a secondary battery packaging film 10 according to some embodiments of this application. The example secondary battery packaging film 10 includes a composite layer 11, a metal layer 14, and a protective layer 15 stacked in sequence. The composite layer 11 includes a first insulation layer 12 and a second insulation layer 13 that are stacked in sequence. The second insulation layer 13 is disposed closer to the metal layer 14. The first insulation layer 12 is disposed farther away from the metal layer 14. When the secondary battery packaging film 10 is applied to a secondary battery pouch, the protective layer 15 is disposed on a side facing away from a cell body, the composite layer 11 is disposed on a side closer to the cell body, and the first insulation layer 12 in the composite layer 11 is in contact with an electrolyte.

In some embodiments, the first insulation layer 12, the second insulation layer 13, the metal layer 14, and the protective layer 15 may be stacked and bonded by using an adhesive. For example, various types of adhesives, such as pressure-sensitive adhesives, thermosetting adhesives, or ultra-violet curable adhesives, are used to bond the various material layers. These adhesives can be applied to a surface of the metal layer 14 in a manner of spin coating, spray coating, or roller coating. For example, ultrasonic bonding is used to bond the various material layers with heat and pressure generated by high-frequency sound waves. It should be understood that the bonding manners mentioned above are merely illustrative, and this application does not impose any limitations on the manner of bonding the various material layers.

In some embodiments, the metal layer 14 includes an aluminum layer, a stainless steel layer, or the like. The metal layer 14 provides an excellent insulation property for an internal environment of the secondary battery, reducing ingress of moisture, oxygen, and another gas into the secondary battery. Additionally, the metal layer 14 can also provide specific mechanical strength and protection, minimizing external physical damage to the pouch during use, such as punctures or abrasions. In addition, the metal layer 14 can enhance safety of the battery by reducing a risk of fracture or leakage of the battery in an accident.

In some embodiments, the protective layer 15 may be made of nylon, which is an inert material. In other words, the protective layer 15 includes a nylon layer. The nylon layer has good mechanical strength, corrosion resistance, wear resistance, high temperature resistance, and processability, serving to prevent external moisture and reduce corrosion of the metal layer 14 by external moisture. In some other embodiments, the protective layer 15 may alternatively be made of a material such as polyethylene, polypropylene, or polyester.

The composite layer 11 includes the first insulation layer 12 farther away from the metal layer 14 and the second insulation layer 13 closer to the metal layer 14. To be specific, the second insulation layer 13 is disposed on a surface of the metal layer 14 facing away from the protective layer 15, and the first insulation layer 12 is disposed on a surface of the second insulation layer 13 facing away from the metal layer 14. A melting point of the second insulation layer 13 is greater than or equal to 250°C, and a thickness of the second insulation layer is greater than or equal to 2 µm. A melting point of the first insulation layer 12 is less than or equal to 200°C.

When the secondary battery packaging film 10 is applied to the secondary battery pouch, at a top sealing portion of the pouch, the first insulation layer 12 fuses with a sealing adhesive on a tab assembly and is sealed through hot pressing, and the second insulation layer 13 insulates and protects the metal layer 14. Because the melting point of the second insulation layer 13 is greater than or equal to 250°C, that is, greater than a maximum temperature (230°C) in the external short circuit test of the battery, and the thickness of the second insulation layer 13 is greater than or equal to 2 µm, the second insulation layer 13 with this thickness has specific melting point stability and can effectively insulate and protect the metal layer 14. When an external short circuit occurs in the battery, the high temperature resistance of the second insulation layer 13 reduces a risk of fusion, thereby reducing a risk of exposing the metal layer 14. In other words, the second insulation layer 13 can effectively insulate the metal layer 14 from a tab, reducing a risk of thermal runaway of the battery caused by a short circuit between the tab and the metal layer 14. In addition, the melting point of the first insulation layer 12 is less than or equal to 200°C, facilitating the fusion and sealing. On one hand, this allows the secondary battery packaging film 10 to be applicable to common heat sealing processes (healing processes typically include: a sealing-head temperature of approximately 180°C to 200°C, a hot pressing time of 3s, and a pressure of 0.1 MPa to 0.5 MPa). On the other hand, since the melting point of the first insulation layer 12 is lower than the maximum temperature (230°C) in the external short circuit test of the secondary battery, under a condition of heat accumulation inside the secondary battery, the first insulation layer 12 may fuse to open the top sealing portion, so that the heat inside the secondary battery can be expelled with high-temperature gas through the opened top sealing portion, thereby effectively reducing the risk of thermal runaway of the secondary battery.

It should be noted that in this application, the "melting point" has the meaning commonly understood in the art and can be determined by using known methods and instruments. For example, a melting point test may be implemented according to the national standard GB/T 28724-2012.

In some embodiments, the melting point of the first insulation layer 12 is greater than or equal to 120°C, and less than or equal to 160°C. For example, the melting point of the first insulation layer 12 may be 120°C, 125°C, 131°C, 140°C, 145°C, 150°C, or 160°C, or may be within a range defined by any of these values.

In these embodiments, the melting point of the first insulation layer 12 is between 120°C and 160°C. On one hand, this melting-point range is applicable to current common packaging processes, allowing the secondary battery packaging film 10 to be applicable to current common packaging machines, thus ensuring versatility. On the other hand, when heat accumulates inside the secondary battery, a lower melting point of the first insulation layer 12 can facilitate opening of the top sealing portion, so that the heat inside the secondary battery can be expelled with high-temperature gas through the opened top sealing portion, thereby effectively reducing the risk of thermal runaway of the secondary battery.

In some embodiments, a material of the first insulation layer 12 comprises one or more of polypropylene and polyethylene. These materials exhibit good heat sealing adhesion, insulation, and resistance to electrolyte corrosion. In these embodiments, specific types of the insulation materials with low melting points in the range of 120°C to 200°C are listed, and persons skilled in the art can make a selection based on an actual need.

In some embodiments, a material of the second insulation layer 13 comprises one or more selected from the group consisting of polyimide, polysilazane and borosilicone rubber. Melting points of these materials can reach 300°C or higher, and these materials have good insulation. Therefore, these materials can protect the metal layer 14 when the external short circuit occurs in the secondary battery, reducing a risk of short circuit caused by contact between the exposed metal layer 14 and the tab, thereby reducing the risk of thermal runaway of the secondary battery caused by the short circuit between the tab and the metal layer 14.

In these embodiments, specific types of the insulation materials with high melting points greater than or equal to 250°C are listed, and persons skilled in the art can make a selection based on an actual need. It is worth noting that these insulation materials have high melting points greater than the maximum temperature (230°C) in the external short circuit test of the secondary battery, facilitating insulation and protection of the metal layer 14, and these materials also have good insulation. For example, polyimide with a dielectric constant of 4.0 at 1000 Hz belongs to insulation materials from class F to class H. Thus, these insulation materials with high melting points can protect the metal layer 14 from contacting with the tab to form the short circuit during the short circuit, thereby reducing the risk of thermal runaway of the battery caused by the short circuit between the tab and the metal layer 14.

In some embodiments, a thickness range of the second insulation layer 13 is 2 µm to 15 µm. For example, the thickness of the second insulation layer 13 may be 2 µm, 3 µm, 4 µm, 5 µm, 6 µm, 7 µm, 8 µm, 9 µm, 10 µm, 11 µm, 12 µm, 13 µm, 14 µm, or 15 µm, or may be within a range defined by any of these values.

In these embodiments, the thickness range of the second insulation layer 13 may be 2 µm to 15 µm. Usually, a thicker second insulation layer 13 has a more stable melting point and higher mechanical strength, and provides better insulation and protection. However, an excessively thick second insulation layer 13 hinders heat transfer from a sealing head to the first insulation layer 12 during the packaging process, making it difficult to achieve fusion and sealing of the first insulation layer 12, which is not conducive to the application of the secondary battery packaging film 10 to the current packaging processes and packaging equipment. Further, the inventor has found that when the thickness of the second insulation layer 13 reaches 15 µm, the second insulation layer 13 can effectively insulate and protect the metal layer 14, the packaging film 10 can be used to effectively address the issue of thermal runaway of the battery caused by the short circuit between the tab and the metal layer 14, and further increasing the thickness of the second insulation layer 13 increases difficulty of packaging, reduces packaging reliability, and results in material waste.

It should be understood that an excessively thin second insulation layer 13 has an unstable melting point and weak mechanical strength, and therefore is prone to fusion or fracture, resulting in poor protection effect. The inventor has also found that when the thickness of the second insulation layer 13 is greater than or equal to 2 µm, the second insulation layer 13 exhibits specific melting point stability and mechanical strength, and can basically insulate and protect the metal layer 14, so that the secondary battery packaging film 10 can be used to reduce the risk of thermal runaway of the secondary battery caused by the short circuit between the tab and the metal layer 14.

Therefore, with the thickness maintained within the range of 2 µm to 15 µm, the second insulation layer 13 can insulate and protect the metal layer 14 to reduce the short circuit between the metal layer 14 and the tab, and is applicable to the current packaging processes and packaging equipment, making the packaging film 10 versatile and widely applicable.

It should be noted that in this application, the "thickness" has the meaning commonly understood in the art and can be determined by using known methods and instruments. For example, a section of the packaging film is obtained, and a thickness is measured by placing the section under a metallographic microscope or a scanning transmission electron microscope.

In some embodiments, the thickness range of the second insulation layer 13 is 8 µm to 12 µm.

In these embodiments, a lower limit of the thickness of the second insulation layer 13 is further limited to 8 µm, and an upper limit is 12 µm. As described above, an excessively thick second insulation layer 13 easily hinders heat transfer from a sealing head to the first insulation layer 12 during the packaging process, making it difficult to achieve fusion and sealing of the first insulation layer 12, which is not conducive to the application of the secondary battery packaging film 10 to the current packaging processes and packaging equipment; and an excessively thin second insulation layer 13 has an unstable melting point and weak mechanical strength, and therefore is prone to fusion or fracture, resulting in poor protection effect. In these embodiments, the thickness of the second insulation layer 13 is maintained within the range of 8 µm to 12 µm to ensure good insulation and a heat transfer capability, so that the secondary battery packaging film 10 can be used to reduce the risk of thermal runaway of the secondary battery caused by the short circuit between the tab and the metal layer 14 and is applicable to the current packaging processes and packaging equipment, and therefore is versatile and widely applicable.

In some embodiments, a total thickness range of the composite layer 11 is 30 µm to 40 µm. For example, the total thickness of the composite layer 11 may be 30 µm, 31 µm, 32 µm, 33 µm, 34 µm, 35 µm, 36 µm, 37 µm, 38 µm, 39 µm, or 40 µm, or may be within a range defined by any of these values.

In these embodiments, the total thickness range of the composite layer 11 is 30 µm to 40 µm. On one hand, the total thickness range of the composite layer 11 is the same as a thickness range of a PP layer in packaging aluminum plastic films in the prior art, and therefore the current packaging processes and packaging equipment can be used for packaging, making the secondary battery packaging film 10 versatile and widely applicable.

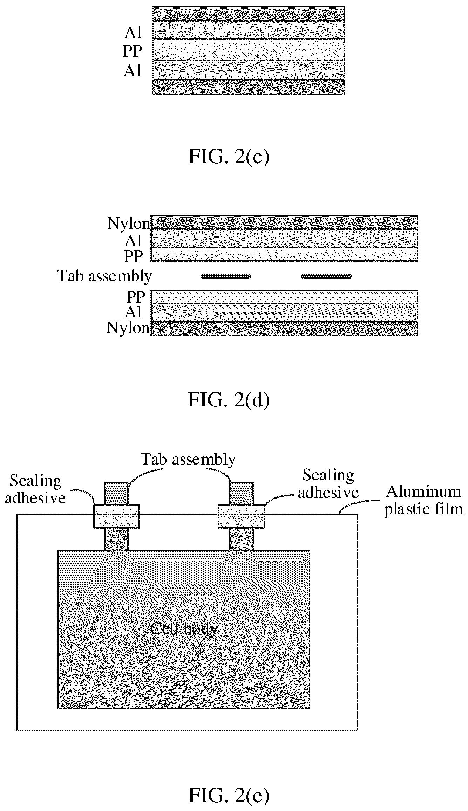

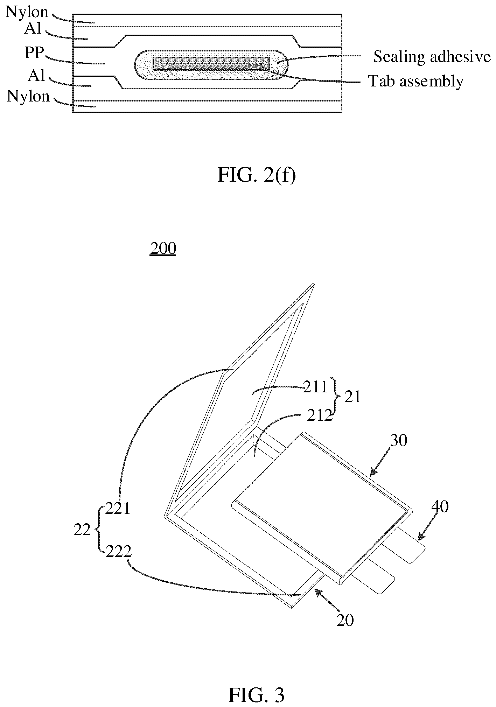

For ease of understanding, the following is a brief introduction to the packaging processes and equipment in the prior art. As shown in FIG. 2(a), before side sealing of a pouch, two layers of packaging aluminum plastic films are stacked with PP layers facing each other. As shown in FIG. 2(b), an upper sealing head and a lower sealing head are used to clamp the two layers of packaging aluminum plastic films, and heating and pressurization are applied for a specific time (for example, heating is performed at approximately 180°C to 200°C under a pressure of 0.1 MPa to 0.5 MPa, and a hot pressing time is 3s). The two PP layers fuse and bond together, to achieve sealing effect shown in FIG. 2(c). As shown in FIG. 2(d), before top sealing, the two layers of packaging aluminum plastic films are stacked with the PP layers facing each other, and a tab assembly is disposed between the two layers of aluminum plastic films. As shown in FIG. 2(e), one end of the tab assembly extends beyond the aluminum plastic film, and a sealing adhesive on any side of the tab assembly is in contact and bonded with the PP layer of one of the packaging aluminum plastic films. In some solutions, the upper sealing head and the lower sealing head used for the top sealing are provided with tab grooves (not shown in the figure). The tab assembly is disposed in the tab grooves when the packaging aluminum plastic film, the tab assembly, and the packaging aluminum plastic film are sequentially clamped by the upper sealing head and the lower sealing head for heating and pressurization. After heating and pressurization are applied for a specific time, the PP layers of the packaging aluminum plastic films fuse and bond with the sealing adhesive on the tab assembly at a location of the tab assembly, achieving sealing effect shown in FIG. 2(f). Similarly, at a location without the tab assembly, the two PP layers fuse and bond together to achieve sealing effect.

It can be learned that the packaging process and packaging equipment are configured based on the requirement of fusing the PP layers, and a thickness of the PP layer directly affects the packaging process. If the PP layer becomes thicker, heat transfer efficiency decreases, and pressure transferred to the PP layer becomes low. To ensure fusion efficiency and a retention rate, a sealing-head temperature, a pressure, or a time may be adjusted. In addition, for the top sealing, a groove depth on the sealing head may be adjusted. If no adjustments are correspondingly made, under a condition that a parameter is low in the packaging process, the PP layer may insufficiently fuse, which can easily affect packaging strength of the secondary battery and lead to leakage of the secondary battery; or under a condition that a parameter is high in the packaging process, the PP layer may excessively fuse, and then the PP layer has poor insulation, which can easily cause electrochemical corrosion of the packaging aluminum plastic film, leading to powder formation of a core layer of the film, and causing breakage and leakage.

In these embodiments, the total thickness range of the composite layer is 30 µm to 40 µm, which is the same as a thickness range of a PP layer in a current packaging aluminum plastic film, so that the current packaging processes and packaging equipment can be used for packaging, making the secondary battery packaging film 10 versatile and widely applicable.

On the other hand, the total thickness range of the composite layer 11 is 30 µm to 40 µm, the thickness range of the second insulation layer 13 is 2 µm to 15 µm, and therefore the thickness range of the first insulation layer 12 is 15 µm to 38 µm. This meets a thickness requirement for fusion and edge sealing. It should be understood that an excessively thin first insulation layer 12 (less than 15 µm) affects post-fusion bonding strength and may have poor insulation due to excessive fusion, and therefore adjustments to the packaging process are necessary; and an excessively thick first insulation layer 12 (greater than 38 µm) increases an overall thickness of the secondary battery packaging film 10 and then slows down heat transfer, which may lead to insufficient fusion and the like, and therefore adjustments to the packaging process are necessary.

Therefore, the total thickness range of the composite layer 11 is 30 µm to 40 µm, the thickness range of the second insulation layer 13 is 2 µm to 15 µm, and the thickness range of the first insulation layer 12 is 15 µm to 38 µm. This effectively ensures good insulation and a heat transfer capability of the second insulation layer 13 and enables the first insulation layer 12 to meet the thickness requirement for fusion and edge sealing, and is applicable to the current packaging processes and packaging equipment, making the secondary battery packaging film 10 widely applicable.

In some embodiments, a thermal conductivity of the second insulation layer 13 is greater than or equal to 0.1 W/m·K.

It should be understood that a thermal conductivity is positively correlated with a heat transfer capability. Usually, a higher thermal conductivity of a material means a stronger heat transfer capability, allowing the material to quickly transfer heat from the sealing head to the first insulation layer 12, facilitating rapid fusion of the first insulation layer 12 to complete the packaging. The thermal conductivity is usually related to factors such as a material type, material density, an environmental temperature, and humidity.

A material that can be used for the first insulation layer 12 includes one or more of polypropylene and polyethylene. A thermal conductivity of polypropylene is around 0.1 W/m·K to 0.4 W/m·K. A thermal conductivity of polyethylene is around 0.2 W/m·K to 0.5 W/m·K. It is clear that the thermal conductivity of the second insulation layer 13 is greater than the thermal conductivity of the first insulation layer 12 or close to the thermal conductivity of the first insulation layer 12, to prevent a situation that heat cannot be transferred to the first insulation layer 12 during the packaging, which hinders completion of the packaging.

Materials limited by high melting points usually have low thermal conductivities, and the inventor has found that when the thermal conductivity of the second insulation layer 13 is greater than or equal to 0.1 W/m·K, heat can be rapidly transferred to the first insulation layer 12 during the packaging. Therefore, the thermal conductivity of the second insulation layer 13 is configured to be greater than or equal to 0.1 W/m·K, so as to facilitate the packaging. It is worth noting that, due to limitations of developing or discovering new materials, there may be a high-melting-point material having a high thermal conductivity that the inventor is not aware of. Therefore, this application does not impose any limitation on an upper limit of the thermal conductivity of the second insulation layer 13.

It should be noted that in this application, the "thermal conductivity" has the meaning commonly understood in the art and can be determined by using known methods and instruments. For example, the thermal conductivity is measured according to the specifications outlined in international thermal conductivity test standards such as ASTM D5470, ASTM E1461, or ASTM E1530.

In some embodiments, a thermal conductivity of the second insulation layer 13 is greater than or equal to 0.2 W/m·K.

In these embodiments, a lower limit of the thermal conductivity of the second insulation layer is further limited to 0.2 W/m·K. As described above, a thermal conductivity is positively correlated with a heat transfer capability, in other words, a higher thermal conductivity of a material means a stronger heat transfer capability, allowing the material to quickly transfer heat from the sealing head to the first insulation layer 12, facilitating rapid fusion of the first insulation layer 12 to complete the packaging. In these embodiments, a thermal conductivity of the second insulation layer 13 is configured to be greater than or equal to 0.2 W/m·K, so as to facilitate heat transfer. This is conducive to the packaging.

For example, a material selected for the second insulation layer 13 includes polyimide, and a material selected for the first insulation layer 12 includes polypropylene. The thermal conductivity of polyimide is around 0.1 W/m·K to 0.3 W/m·K, and the thermal conductivity of polypropylene is around 0.1 W/m·K to 0.4 W/m·K. It can be learned that a lower limit of the thermal conductivity range of the second insulation layer 13 is greater than a lower limit of the thermal conductivity range of the first insulation layer 12, and an upper limit of the thermal conductivity range of the second insulation layer 13 is close to an upper limit of the thermal conductivity range of the first insulation layer 12. This means that the thermal conductivity of the second insulation layer 13 is greater than or close to the thermal conductivity of the first insulation layer 12, so that heat can be transferred to the first insulation layer 12 during the packaging, and then the first insulation layer 12 can fuse under heat to complete the packaging.

It should be understood that the secondary battery packaging film 10 may further include another functional layer. For example, an adhesive layer may be further included between the protective layer 15 and the metal layer 14 to ensure that the protective layer 15 and the metal layer 14 are stably bonded and do not easily detach. Persons skilled in the art can choose a specific type of the adhesive layer based on an actual condition. For another example, an adhesive layer may be further included between the first insulation layer 12 and the second insulation layer 13 to ensure that the first insulation layer 12 and the second insulation layer 13 are stably bonded and do not easily detach. Persons skilled in the art can choose a specific type of the adhesive layer based on an actual condition. For another example, an adhesive layer may be further included between the second insulation layer 13 and the metal layer 14 to ensure that the second insulation layer 13 and the metal layer 14 are stably bonded and do not easily detach. Persons skilled in the art can choose a specific type of the adhesive layer based on an actual condition.

### Secondary battery

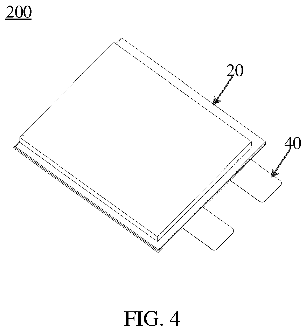

A second aspect of this application provides a secondary battery 200. Refer to FIG. 3 and FIG. 4. The secondary battery 200 includes a pouch 20, a cell body 30, and a tab assembly 40. The pouch 20 includes a pouch body 21 and a top sealing portion 22 connected to the pouch body 21. The pouch body 21 is enclosed by a first pouch body 211 and a second pouch body 212. The top sealing portion 22 is formed by a first top sealing portion 221 and a second top sealing portion 222 that are bonded and in contact with each other. The top sealing portion 22 is used for packaging of the pouch body 21.

The first pouch body 211 and the second pouch body 212 enclose an accommodation cavity. The cell body 30 is accommodated by the accommodation cavity. The cell body 30 is a core component for charge and discharge performed by the secondary battery 200. One end of the tab assembly 40 is electrically connected to the cell body 30, while another end penetrates the pouch body 21 and the top sealing portion 22 and then extends beyond the pouch 20. The pouch body 21 is further filled with an electrolyte. A part of the tab assembly 40 that extends beyond the pouch 20 connects to an external circuit (not shown in the figure). When the external circuit is connected to a load, the secondary battery 200 can supply power to the load; and when the external circuit is connected to an external power source, the external power source can charge the secondary battery 200.

The pouch 20 includes the secondary battery packaging film 10 according to any one of the foregoing embodiments. In some embodiments, the secondary battery packaging film 10 in the first aspect is applied to both the pouch body 21 and the top sealing portion 22, and the pouch body 21 and the top sealing portion 22 are integrally formed. For the foregoing pouch 20, a single secondary battery packaging film 10 may be punched and folded, and then placed in the cell body 30, and edge sealing is performed for packaging. As shown in FIG. 3, before the cell body 30 is accommodated, the secondary battery packaging film 10 may be formed through punch. For example, the pouch 20 includes the first pouch body 211 and a second pouch body 212 that are connected with each other, where a first pit is formed on the first pouch body 211 through punch, and a second pit is formed on the second pouch body 212 through punch. The second pit and the first pit are opposite and encloses the foregoing accommodation cavity.

In some other embodiments, alternatively, two secondary battery packaging films 10 are used. A pit is formed on each of the two secondary battery packaging films 10 through punch. The cell body 30 is placed in a pit of one secondary battery packaging film 10, and then is covered by the other secondary battery packaging film 10. In this way, the opposite pits of the two secondary battery packaging films 10 enclose the accommodation cavity that accommodates the cell body 30. Subsequently, edge sealing is performed on the two secondary battery packaging films 10 for packaging. Herein, a packaging process may be a current packaging process. For example, the packaging process may be the packaging process described in FIG. 2(a) to FIG. 2(f), but a difference is that the secondary battery packaging film 10 in this application replaces the current packaging aluminum plastic film.

In this embodiment, the secondary battery packaging film 10 in the first aspect is applied to the entire pouch 20; the first insulation layer 12 of the composite layer 11 in the secondary battery packaging film 10 fuses for sealing; and the second insulation layer 13 of the composite layer 11 in the secondary battery packaging film 10 can insulate the metal layer 14 from the tab assembly 40, reducing the risk of thermal runaway of the battery caused by the short circuit between the tab assembly 40 and the metal layer 14. This minimizes occurrence of thermal runaway when the external short circuit occurs in the obtained secondary battery 200, ensuring strong safety. In addition, in a case that heat accumulates inside the secondary battery 200, the first insulation layer 12 can fuse to open the top sealing portion 22, so that the heat inside the secondary battery 200 can be expelled with high-temperature gas through the opened top sealing portion 22, further reducing the risk of thermal runaway of the secondary battery 200, and enhancing the safety of the secondary battery 200.

It should be noted that a type and shape of the cell body 30 are not limited in this application, and persons skilled in the art can make a selection based on an actual need. For example, the cell body 30 can be obtained by winding or stacking a positive electrode and a negative electrode with a separator.

A type and shape of the tab assembly 40 are not limited either in this application, and can be configured by persons skilled in the art based on an actual need. For example, the tab assembly 40 includes a metal strip and sealing adhesive, with the sealing adhesive applied to both surfaces of the metal strip and wrapping part of the metal strip.

### Secondary battery

A third aspect of this application provides a secondary battery, including a tab assembly, a cell body, and a pouch configured to accommodate the cell body. The pouch includes a pouch body and a top sealing portion connected to the pouch body. One end of the tab assembly is electrically connected to the cell body, and another end of the tab assembly penetrates the pouch body and the top sealing portion and then extends beyond the pouch.

In this embodiment, a structure of the secondary battery may be the same as the structure of the secondary battery in the embodiment of the second aspect, and is not repeatedly described herein. A difference is that, in this embodiment, the top sealing portion includes the secondary battery packaging film 10 according to any one of these embodiments of the first aspect in this application, but another packaging film may be used for the pouch body. Herein, a manner of connecting the pouch body and the top sealing portion is not limited. For example, protective layers and metal layers of the two parts may form respective entireties, and a heat sealing layer of the pouch body can be spliced or overlapped with the composite layer 11 of the top sealing portion. For example, the pouch body and the top sealing portion may be connected through heat sealing.

It should be understood that since the tab assembly extends from the top sealing portion and beyond the pouch, there is a risk that, at the top sealing portion, the tab assembly comes into contact with the metal layer in the pouch. Therefore, the packaging film 10 according to any one of these embodiments of the first aspect in this application may be used only at the top sealing portion of the pouch. This can also minimize occurrence of thermal runaway when the external short circuit or internal heat accumulation occurs in the obtained secondary battery. In this way, strong safety is ensured while costs of the pouch are reduced.

### Electric apparatus

A fourth aspect of this application provides an electric apparatus including the secondary battery according to any embodiment in the second aspect or the secondary battery according to any embodiment in the third aspect.

The electric apparatus in this application is not specifically limited, and the electric apparatus may be any known electric device in the prior art. In some embodiments, the electric apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

The following describes examples of this application. The examples described below are illustrative and only used to explain this application, and cannot be construed as limitations on this application. Examples whose technical solutions or conditions are not specified are made in accordance with technical solutions or conditions described in literature in the field, or made in accordance with product instructions. The reagents or instruments used are all conventional products that are commercially available if no manufacturer is indicated.

### Example 1

### Preparation of secondary battery packaging film

The nylon layer was bonded to a first surface of the aluminum layer by an adhesive, the polyimide layer was bonded to a second surface of the aluminum layer by an adhesive, and the PP layer was bonded to a surface of the polyimide layer leaving the aluminum layer, to obtain a secondary battery packaging film. The polyimide layer and the PP layer formed the composite layer. A thickness of the polyimide layer was 2 µm. A thickness of the PP layer was 33 µm. A total thickness of the composite layer was 35 µm. A thermal conductivity of the polyimide layer was 0.1 W/m·K. A melting point of the polyimide layer was 250°C. A melting point of the PP layer was 160°C.

### Examples 2 to 5

Preparation of secondary battery packaging film: These examples are similar to Example 1 except that a thickness of the polyimide layer and a thickness of the PP layer were changed. For specific parameters, refer to Table 1.

### Example 6

Preparation of secondary battery packaging film: This example was similar to Example 1 except that a thermal conductivity of the polyimide layer was 0.2 W/m·K. For specific parameters, refer to Table 1.

### Examples 7 and 8

Preparation of secondary battery packaging film: This example was similar to Example 1 except that the polyimide layer was replaced by a polysilazane layer or a borosilicone rubber layer. For specific parameters, refer to Table 1.

### Comparative example 1

Preparation of packaging aluminum plastic film in the prior art: A nylon layer was bonded to a first surface of an aluminum layer by an adhesive, and a PP layer was bonded to a second surface of the aluminum layer by an adhesive, to obtain the packaging aluminum plastic film in the prior art. A thickness of the PP layer was 35 µm, and a melting point of the PP layer was 160°C.

### Comparative examples 2 and 3

Preparation of secondary battery packaging film: The comparative examples were similar to Example 1 except that the thicknesses and the melting points of the polyimide layer and the PP layer were changed. For specific parameters, refer to Table 1. It should be noted that the melting point of the polyimide material is related to factors such as a degree of polymerization, a molecular structure, and crystallinity of the material. Therefore, the melting point of the used polyimide changes accordingly with changes in the degree of polymerization, the molecular structure, and the crystallinity of the material. Based on experimental needs, polyimide films with different melting points available on the market can be obtained.

The secondary battery packaging film in these examples and comparative examples or the packaging aluminum plastic film in the prior art was stored in an environment at a temperature of 25±3°C and a humidity of 60% for 24 h. Then, the punch process was performed on the secondary battery packaging film or the packaging aluminum plastic film in the prior art, to create the pit capable of accommodating the cell body. The packaging process was performed after the cell body was placed into the pit, to obtain the secondary battery. Herein, Examples 1 to 8 and Comparative examples 1 to 3 all used the same packaging process (a sealing-head temperature of 180°C, a pressure of 0.4 Mpa, and a hot pressing time of 3s).

### Tests

The following tests were performed on the secondary battery in the Examples 1 to 8 and Comparative examples 1 to 3.

### (1) Top sealing portion pull-force test

A packaged secondary battery was placed on a platform of a pull-force tester. Two clamps separately held the first top sealing portion 221 and the second top sealing portion 222. Then, the two clamps were pulled in opposite directions until the first top sealing portion 221 and the second top sealing portion 222 were completely separated. A pull force value at that time indicates a pull force of the top sealing portion. The pull force of the top sealing portion might represent packaging strength of the top sealing portion. A larger pull force of the top sealing portion indicated greater packaging reliability.

### (2) External short circuit test

The external short circuit test was conducted according to the standard GB 31241-2014 Safety Requirements for Lithium-ion Batteries and Battery Packs for Portable Electronic Products. Specific experimental conditions and procedures followed section 9.6 of the standard GB 31241-2014. To be specific, after the secondary battery was fully charged according to the test method specified in section 4.5.1 of GB 31241-2014, a positive terminal and a negative terminal of the secondary battery were short-circuited, and an external short circuit resistance totals (80±20) mΩ. During 24 h in which the secondary battery was short-circuited, the secondary battery should not catch fire, explode, or leak, that is, thermal runaway should not occur.

A sealed area of the secondary battery that passed the external short circuit test were opened to observe whether the aluminum layer in the packaging film was exposed.

### (3) Extended external short circuit test

For the secondary battery that passed the external short circuit test, short circuit duration of the secondary battery was extended based on the test (2), to allow heat to accumulate in the secondary battery. An opening status of the top sealing portion and thermal runaway situations such as explosion or fire were under observation.

**Table 1**

| Group | Composite layer | | | Test result | | |
|---|---|---|---|---|---|---|
| | Second insulation layer | First insulation layer | Total thickness (µm) | Pull force of top sealing portion (N) | External short circuit test | Extended external short circuit test |
| Example 1 | Polyimide layer with a thickness of 2 µm, a thermal conductivity of 0.1 W/m·K, and a melting point of 250°C | PP layer with a thickness of 33 µm and a melting point of 160°C | 35 | 43.0 | Thermal runaway did not occur, and exposure of the aluminum layer was not found | The top sealing portion was opened, and thermal runaway did not occur |
| Example 2 | Polyimide layer with a thickness of 8 µm, a thermal conductivity of 0.1 W/m·K, and a melting point of 250°C | PP layer with a thickness of 27 µm and a melting point of 160°C | 35 | 42.2 | Thermal runaway did not occur, and exposure of the aluminum layer was not found | The top sealing portion was opened, and thermal runaway did not occur |
| Example 3 | Polyimide layer with a thickness of 12 µm, a thermal conductivity of 0.1 W/m·K, and a melting point of 250°C | PP layer with a thickness of 23 µm and a melting point of 160°C | 35 | 41.5 | Thermal runaway did not occur, and exposure of the aluminum layer was not found | The top sealing portion was opened, and thermal runaway did not occur |
| Example 4 | Polyimide layer with a thickness of 15 µm, a thermal conductivity of 0.1 W/m·K, and a melting point of 250°C | PP layer with a thickness of 20 µm and a melting point of 160°C | 35 | 40.8 | Thermal runaway did not occur, and exposure of the aluminum layer was not found | The top sealing portion was opened, and thermal runaway did not occur |
| Example 5 | Polyimide layer with a thickness of 16 µm, a thermal conductivity of 0.1 W/m·K, and a melting point of 250°C | PP layer with a thickness of 19 µm and a melting point of 160°C | 35 | 38.5 | Thermal runaway did not occur, and exposure of the aluminum layer was not found | The top sealing portion was opened, and thermal runaway did not occur |
| Example 6 | Polyimide layer with a thickness of 2 µm, a thermal conductivity of 0.2 W/m·K, and a melting point of 250°C | PP layer with a thickness of 33 µm and a melting point of 160°C | 35 | 45.1 | Thermal runaway did not occur, and exposure of the aluminum layer was not found | The top sealing portion was opened, and thermal runaway did not occur |
| Example 7 | Polysilazane layer with a thickness of 2 µm, a thermal conductivity of 0.5 W/m·K, and a melting point of 250°C | PP layer with a thickness of 33 µm and a melting point of 160°C | 35 | 46.6 | Thermal runaway did not occur, and exposure of the aluminum layer was not found | The top sealing portion was opened, and thermal runaway did not occur |
| Example 8 | Borosilicone rubber layer with a thickness of 2 µm, a thermal conductivity of 0.2 W/m·K, and a melting point of 250°C | PP layer with a thickness of 33 µm and a melting point of 160°C | 35 | 45.2 | Thermal runaway did not occur, and exposure of the aluminum layer was not found | The top sealing portion was opened, and thermal runaway did not occur |
| Comparative example 1 | PP layer with a thickness of 35 µm and a melting point of 160°C | | | 48.1 | Thermal runaway occurred, and the aluminum layer was exposed | / |
| Comparative example 2 | Polyimide layer with a thickness of 2 µm, a thermal conductivity of 0.1 W/m·K, and a melting point of 240°C | PP layer with a thickness of 33 µm and a melting point of 160°C | 35 | 43.2 | Thermal runaway occurred, and the aluminum layer was exposed | / |
| Comparative example 3 | Polyimide layer with a thickness of 1 µm, a thermal conductivity of 0.1 W/m·K, and a melting point of 250°C | PP layer with a thickness of 34 µm and a melting point of 160°C | 35 | 44.2 | Thermal runaway occurred, and the aluminum layer was exposed | / |

| | | | | | | |
|---|---|---|---|---|---|---|
| Note: "/" in the table means the absence of data. | | | | | | |

It can be learned, from Comparative examples 1 to 3 and Example 1 in Table 1, that the pouch of the secondary battery in Comparative example 1 includes a single PP layer, resulting in thermal runaway and exposure of the aluminum layer during the external short circuit test; and in Example 1, the second insulation layer with the melting point of 250°C and the thickness of 2 µm is added, a result of the external short circuit test is that thermal runaway did not occur and exposure of the aluminum layer at the top sealing portion was not found, and thermal runaway did not occur during the extended external short circuit test. This indicates that the second insulation layer with the melting point greater than or equal to 250°C can effectively insulate the aluminum layer from the tab assembly in the packaging film, reducing thermal runaway of the battery caused by the short circuit between the tab assembly and the aluminum layer. However, if the melting point of the second insulation layer is reduced to 240°C or the thickness of the second insulation layer is decreased to 1 µm, the second insulation layer cannot insulate and protect the metal layer, failing to prevent thermal runaway during the external short circuit test.

It can be learned from Examples 1 to 5 in Table 1 that when the thickness of the second insulation layer is in the range of 2 µm to 15 µm, the aluminum layer can be effectively insulated and protected, preventing thermal runaway of the secondary battery during the external short circuit test, and meanwhile the pull force of the top sealing portion is maintained within a specific range. However, when the thickness of the second insulation layer reaches 16 µm, the pull force of the top sealing portion drops to below 40 N. This is mainly because, when the second insulation layer with the high melting point is thick, transferring heat in the sealing head to the first insulation layer is difficult in the top sealing process, resulting in insufficient sealing strength at the top sealing portion. This significantly impacts reliability during use of the secondary battery and a service life of the secondary battery. Therefore, to ensure effect of insulation and protection of the second insulation layer and reliability of the packaging, a preferred thickness of the second insulation layer is 2 µm to 15 µm.

It can be learned, from Examples 1 and 6 in Table 1, that when the thermal conductivity of the second insulation layer increases from 0.1 W/m·K to 0.2 W/m·K, the pull force of the top sealing portion increases from 43.0 N to 45.1 N. This indicates that a second insulation layer with a higher thermal conductivity has a stronger heat transfer capability, allowing the heat from the sealing head to be more effectively transferred to the first insulation layer, so that the first insulation layer can fuse under heat to complete the packaging, so as to obtain a secondary battery with higher packaging reliability.

Examples 7 and 8 in Table 1 are implementations in which the second insulation layer is another insulation material layer with a high melting point. The top sealing portion of the secondary battery still exhibits good fusion and sealing effect and can reduce safety risks associated with thermal runaway of the secondary battery.

The Examples 1 to 8 and Comparative examples 1 to 3 all use a conventional packaging process. The packaging film in examples in this application is applicable to the current packaging processes and packaging equipment, and therefore is versatile and widely applicable.

Finally, it should be noted that the foregoing embodiments are merely intended to describe the technical solutions of this application, and are not intended to limit this application. Based on the idea of this application, the foregoing embodiments or the technical features in different embodiments can be combined, the steps can be implemented in any order, and there are many other changes in different aspects of this application as described above, which, for the sake of brevity, are not provided in detail. Although this application is described in detail with reference to the foregoing embodiments, persons of ordinary skill in the art should understand that modifications can be made to the technical solutions described in the foregoing embodiments, or equivalent substitutions can be made to some technical features therein, and these modifications or substitutions do not make the essence of the corresponding technical solutions depart from the scope of the technical solutions of these embodiments of this application.

## Claims

1. A secondary battery packaging film (10), comprising:
a composite layer (11);
a metal layer (14), wherein the metal layer (14) is disposed on a surface of the composite layer (11); and
a protective layer (15), wherein the protective layer (15) is disposed on a side of the metal layer (14) facing away from the composite layer (11);
**characterized in that**, the composite layer (11) comprises a first insulation layer (12) and a second insulation layer (13), along a thickness direction of the composite layer (11), the second insulation layer (13) is disposed between the metal layer (14) and the first insulation layer (12); a melting point of the second insulation layer (13) is greater than or equal to 250°C, a thickness of the second insulation layer (13) is greater than or equal to 2 µm, and a melting point of the first insulation layer (12) is less than or equal to 200°C.

2. The secondary battery packaging film (10) according to claim 1, **characterized in that**, the melting point of the first insulation layer (12) is greater than or equal to 120°C, and less than or equal to 160°C.

3. The secondary battery packaging film (10) according to claim 1 or 2, **characterized in that**, a material of the second insulation layer (13) comprises one or more selected from the group consisting of polyimide, polysilazane and borosilicone rubber.

4. The secondary battery packaging film (10) according to any one of claims 1 to 3, **characterized in that**, the thickness of the second insulation layer (13) is in a range of 2 µm to 15 µm.

5. The secondary battery packaging film (10) according to claim 4, **characterized in that**, the thickness of the second insulation layer (13) is in a range of 8 µm to 12 µm.

6. The secondary battery packaging film (10) according to claim 4 or 5, **characterized in that**, a total thickness of the composite layer (11) is in a range of 30 µm to 40 µm.

7. The secondary battery packaging film (10) according to any one of claims 1 to 6, **characterized in that**, a thermal conductivity of the second insulation layer (13) is greater than or equal to 0.1 W/m·K.

8. The secondary battery packaging film (10) according to claim 7, **characterized in that**, the thermal conductivity of the second insulation layer (13) is greater than or equal to 0.2 W/m·K.

9. The secondary battery packaging film (10) according to any one of claims 1 to 8, **characterized in that**,
a material of the first insulation layer (12) comprises one or more of polypropylene and polyethylene;
the metal layer (14) comprises an aluminum layer; and
the protective layer (15) comprises a nylon layer.

10. A secondary battery (200), comprising a tab assembly (40), a cell body (30), and a pouch (20) accommodating the cell body (30); wherein the pouch (20) comprises a pouch body (21) and a top sealing portion (22) connected to the pouch body (21), one end of the tab assembly (40) is electrically connected to the cell body (30), and another end of the tab assembly (40) penetrates the pouch body (21) and the top sealing portion (22) and then extends out of the pouch (20); **characterized in that**,
the pouch (20) comprises the secondary battery packaging film (10) according to any one of claims 1 to 9; and
the composite layer (11) is disposed between the cell body (30) and the metal layer (14).

11. The secondary battery (200) according to claim 10, **characterized in that**,
the top sealing portion (22) comprises the secondary battery packaging film (10).

12. An electric apparatus, **characterized in that**, the electric apparatus comprises the secondary battery (200) according to claim 10 or 11.
